# EUROPÄISCHE PATENTANMELDUNG

(11) **EP 2 849 540 A2**
(43) Veröffentlichungstag der Anmeldung: **18.03.2015**
(21) Anmeldenummer: 14171570.6
(22) Anmeldetag: 06.06.2014
(51) Int. Cl.: H05B 37/02

(54) **Außenleuchte und Außenbeleuchtungssystem mit entsprechenden Außenleuchten**

(30) Priorität: 14.07.2013 DE 102013213743; 14.11.2013 DE 102013223206
(71) Anmelder: Binder Systems Group GmbH, 74172 Neckarsulm (DE)
(72) Erfinder: Grunow, Werner, 74078 Heilbronn (DE)
(74) Vertreter: Ullrich & Naumann

(57) **Zusammenfassung**

Eine Außenleuchte mit einem Leuchtmittel (3), einer Stromversorgung und einer Steuereinrichtung zur Betätigung des Leuchtmittels (3), wobei die Steuereinrichtung ggf. einen Prozessor (4) und eine Sensorik umfasst oder mit einer externen Sensorik kommuniziert, ist dadurch gekennzeichnet, dass die Sensorik mindestens einen Radarsensor (6) aufweist.

## Beschreibung

Die Erfindung betrifft eine Außenleuchte mit einem Leuchtmittel, einer Stromversorgung und einer Steuereinrichtung zur Betätigung des Leuchtmittels, wobei die Steuereinrichtung ggf. einen Prozessor und eine Sensorik umfasst oder mit einer externen Sensorik kommuniziert.

Außenleuchten der gattungsbildenden Art sind in unterschiedlichen Ausprägungen aus der Praxis bekannt. Meist sind solche Außenleuchten mit IR-Sensoren und/oder Ultraschall-Sensoren ausgestattet, nämlich mit entsprechenden Bewegungsmeldern, die regelmäßig auf Tiere wie Hunde und Katzen, aber auch auf Kleinstteile wie Blätter und nicht selten auch auf Regen reagieren. Dies führt zu unnötigen Schaltzyklen, die es nicht zuletzt aus Gründen eines geringen Energiebedarfs und zur Reduktion von Verschleiß zu vermeiden gilt.

Unter Nutzung von Wärmesensoren ist eine Unterscheidung zwischen Kleintieren und Menschen nicht oder allenfalls nur bedingt möglich. Auch hier sind häufige und unnötige Schaltzyklen die Folge.

Die aus der Praxis bekannten Außenleuchten, bei denen IR-Sensoren oder Bewegungsmelder zum Einschalten des Leuchtmittels vorgesehen sind, arbeiten somit nicht bedarfsgerecht, schalten vielmehr bei beliebigen irrelevanten Umgebungseinflüssen das Leuchtmittel ein. Unnötige Einschaltvorgänge bewerkstelligen nicht nur einen enormen Energiebedarf, verringern vielmehr auch die Lebensdauer der Leuchtmittel.

Der Erfindung liegt daher die Aufgabe zugrunde, eine Außenleuchte anzugeben, die sich bedarfsgerecht automatisch ein- und ausschalten lässt. Sie soll durch einen geringen Energiebedarf und eine lange Lebensdauer geprägt sein.

Voranstehende Aufgabe ist durch die Merkmale des Anspruchs 1 gelöst. Danach ist die hier in Rede stehende Außenleuchte dadurch gekennzeichnet, dass die Sensorik mindestens einen Radarsensor aufweist.

Erfindungsgemäß ist erkannt worden, dass zum bedarfsgerechten automatischen Ein- und Ausschalten eine besondere Sensorik erforderlich ist, die sich aufgrund ihrer Spezifikation auf konkrete Objekte/Lebenswesen einstellen lässt. Dazu eignet sich die Radartechnologie und entsprechend der Radarsensor in ganz besonderer Weise. So nutzt der Radarsensor ausgesandte elektromagnetische Wellen, die von Objekten, entsprechend ihrer Beschaffenheit, als "Echo" unterschiedlich reflektiert und vom Sensor als Sekundärsignal empfangen werden. Unter Nutzung der Radartechnologie lassen sich auch Entfernungen und Winkel detektieren. Auch die Bewegungsrichtung ist feststellbar, insbesondere eine Relativbewegung zwischen dem Sensor und dem detektierten Objekt. Außerdem verfügt ein Radarsensor über eine hinreichend gute Auflösung, so dass sich sogar Konturen des Objekts erkennen lassen, wodurch bei entsprechender Eichung/Einstellung Fehlschaltungen der Außenbeleuchtung, beispielsweise aufgrund ansonsten detektierter Tiere, vermeidbar sind.

Jedenfalls bietet die Verwendung des Radarsensors die Möglichkeit, die Außenleuchte automatisch einzuschalten, nämlich bei sicherer Detektion von Menschen und/oder Fahrzeugen und unter Ausschluss von Fehlschaltungen, beispielsweise aufgrund herumfliegender Blätter, herumlaufender Kleintiere, etc.

Somit lassen sich unter Nutzung der Radartechnologie Energieeinsparungen realisieren, durch auf den Bedarfsfall beschränkte Einschaltzyklen. Die differenzierte Radarerkennung eliminiert unerwünschte Störfaktoren bei großer Reichweite des Sensors. Es lässt sich sicherstellen, das die Leuchtmittel tatsächlich auch nur im Bedarfsfall eingeschaltet werden, nämlich unter Zugrundelegung der Erkennbarkeit eines Bewegungsmusters und von Umrissen, Oberflächenreliefs und ggf. Oberflächentexturen.

Wie bereits zuvor ausgeführt, ist die Sensorik - unter Verwendung mindestens eines Radarsensors - derart eingestellt und/oder ausgelegt, dass sie Menschen und ggf. Fahrzeuge erfasst, jedoch nicht Tiere, Blätter, Wassertropfen, etc. Die fehlerhafte Erfassung von Umwelteinflüssen ist weitestgehend reduziert, wodurch sich die Einschaltzyklen auch tatsächlich nur auf den Bedarfsfall beziehen.

In ganz besonders vorteilhafter Weise detektiert die Sensorik neben der Anwesenheit auch die Bewegungsrichtung von Personen und/oder Fahrzeugen. Insoweit handelt es sich um ein quasi intelligentes Detektionssystem, so dass durch die Detektion auch der Schaltvorgang einer benachbarten Außenleuchte beeinflussbar ist. Dazu wird später noch in Bezug auf das ebenfalls beanspruchte Außenbeleuchtungssystem Bezug genommen werden.

In ganz besonders vorteilhafter Weise ist es möglich, dass bei detektierter Annäherung bis hin zur Anwesenheit vor oder an der Leuchte die Leuchtmittel in Stufen oder stetig bis zur vollständigen Leuchtkraft aktiviert werden. Entsprechend ist es von Vorteil, wenn bei detektierter Entfernung, d.h. wenn sich beispielsweise eine Person von der Außenleuchte allmählich entfernt, die Leuchtmittel in Stufen oder stetig sukzessive deaktiviert werden.

Alternativ ist eine umgekehrte Schaltung denkbar, geht man davon aus, dass der Lichtbedarf mit zunehmender Entfernung von der Außenleuchte zunimmt. So ist es in ganz besonders raffinierter Weise möglich, dass die Leuchtmittel bei weit entfernter Person mit voller Leuchtkraft aktiviert sind und dass bei sich nähernden Personen die Leuchtmittel allmählich ihre Leuchtkraft herunterregeln, damit bei Anwesenheit unmittelbar vor oder an der Außenleuchte keine unangenehme Blendung stattfindet. Jedenfalls lassen sich aufgrund der intelligenten Sensorik und Steuerung beliebige Beleuchtungssituationen in den Bewegungsablauf der detektierten Personen realisieren, nämlich unter Zugrundelegung einer geeigneten Steuerung bzw. einer die Steuerung beaufschlagenden Software.

Häufig wird die Leuchtkraft einer Außenleuchte, beispielsweise einer Straßenleuchte, dadurch negativ beeinflusst, dass Fliegen den Schirm zumindest teilweise abdecken bzw. verdecken. Um dies wirksam zu vermeiden, können die Leuchtmittel zumindest teilweise vorzugsweise im hochfrequenten Bereich pulsmodulierbar sein, nämlich zumindest kurzzeitig hochfrequent flimmern, um die Fliegen zu irritieren. Im Test hat sich herausgestellt, dass solche Maßnahmen zum Vertreiben der Fliegen geeignet sind.

Als Leuchtmittel eignet sich ganz besonders ein LED-Leuchtmittel, wobei dieses mit unterschiedlicher Ausprägung und Leuchtkraft verfügbar ist. Dabei ist wesentlich, dass neue LED-Technologien insbesondere bei der Gebäude- und Straßenbeleuchtung enorme Einsparungen an Energie und Kosten hervorrufen, regelmäßig im Bereich zwischen 50 % bis 60 %, auch unter Berücksichtigung der Amortisationszeit. Die zunehmend hohe Lebensdauer der LEDs spricht für deren Einsatz. Wartungskosten sind entsprechend gering. Außerdem lassen sich LED-Leuchtmittel problemlos steuern bzw. in ihrer Lichtemission regeln, vor allem auch dimmen und pulsmoduliert aktivieren.

In Bezug auf die Stromversorgung ist es grundsätzlich denkbar, eine beispielsweise als Straßenleuchte dienende Außenleuchte an das Starkstromnetz anzuschließen. Entsprechende Vorschaltgeräte müssen dann in der Außenleuchte vorhanden sein. Ergänzend oder alternativ zum Anschluss an ein Starkstromnetz ist die Stromversorgung über Solarzellen, ggf. unter Nutzung eines Energiemanagementsystems, möglich, wobei ein regelmäßig integrierter Akkumulator zur Pufferung des Stroms und zur Stromversorgung bei Nacht dient. Die Solarzellen können integriert sein, beispielsweise auf dem Deckel eines Lampenschirms oder aber auch auf einem Gehäuse, einer Stange, etc., auch als Außenbeschichtung aufgebracht sein.

Ein weiterer Vorteil der erfindungsgemäßen Außenleuchte ergibt sich durch Realisierung einer Funkverbindung der Außenleuchte bzw. der Steuerung der Außenleuchte mit einer Zentrale. Im Rahmen einer solchen Verbindung lassen sich die Signale der Sensorik über die Zentrale auswerten und ist eine Steuerung der Außenleuchte über die Zentrale möglich. Auch lässt sich über eine solche Funkverbindung eine Fernwartung durchführen.

In weiter vorteilhafter Weise verfügt die Außenleuchte über eine integrierte Selbstdiagnose, die beispielsweise einen Statusbericht, insbesondere eine Fehlermeldung, an die Zentrale übermittelt. Auch ist es denkbar, dass der Statusbericht bzw. die Fehlermeldung an jeder Außenleuchte über ein mobiles Gerät abrufbar ist. Auch ist es denkbar, dass die Außenleuchte über einen zusätzlichen Anschluss verfügt, an den sich beispielsweise ein mobiler Rechner bzw. ein Notebook anschließen lässt. So ist es weiter denkbar, dass an jeder Außenleuchte eine bedarfsgerechte Programmierung, vorzugsweise vor Ort, erfolgen kann, nämlich in Abhängigkeit der konkreten Situation, in der sich die Außenleuchte befindet.

Auch kann die Außenleuchte über eine Anbindung an das Internet, über LAN oder WLAN, verfügen. Dabei ist es denkbar, dass über WLAN, LAN, UMTS, Bluetooth, Funk etc. die Ankopplung an einen Organizer, Pad oder einen mobilen Rechner, vorzugsweise ein Notebook, möglich ist. Es lässt sich auf die Steuerung und ggf. den integrierten Prozessor zugreifen, einerseits zur Fehlerdiagnose/Fehlerbehebung, andererseits zum unmittelbaren Zugriff auf die Steuerung. Auch lässt sich so eine manuelle Betätigung vornehmen, beispielsweise über einen Organizer, ein mobiles Telefongerät, per Funk, WLAN, etc.

Mehrere erfindungsgemäße Außenleuchten lassen sich zu einem Außenbeleuchtungssystem zusammenfassen, wobei die verschiedenen Außenleuchten des Außenbeleuchtungssystems beispielsweise per Funk miteinander kommunizieren. Über die detektierte Anwesenheit und Bewegungsrichtung lässt sich eine Art Vorschau rechnen, die ein Schaltsignal zum Einschaltung der in Bewegungsrichtung benachbarten Außenleuchte liefert. Somit ist ein intelligentes Außenbeleuchtungssystem geschaffen, welches unter Vermeidung unnötiger Schaltzyklen bedarfsgerecht die einzelnen Außenleuchten ein- und ausschaltet.

Auch ist es denkbar, dass aus der Detektion der Sensorik benachbarter Leuchten die Bewegungsgeschwindigkeit einer Person bzw. einer Personengruppe oder eines Kraftfahrzeugs ermittelt wird. Die diesbezüglichen Signale liefern der Steuereinrichtung ein Signal zur Beeinflussung der Schaltzyklen bzw. der Einschaltdauer, beispielsweise einer einzelnen oder nachfolgenden Außenleuchte oder einer Gruppe von Außenleuchten.

Bei einer Anordnung mehrerer Außenleuchten ist es möglich, dass stets zwei oder drei benachbarte Außenleuchten gleichzeitig eingeschaltet werden, entsprechend der detektierten Bewegung und der Standortveränderung der jeweiligen Person. Somit ist sichergestellt, dass nicht nur der Bereich um eine einzelne Außenleuchte herum erhellt ist, vielmehr eine überschaubare Wegstrecke, über die hinweg sich die Person bewegt. Dadurch ist eine erhebliche Sicherheit für die Person geschaffen.

In weiter vorteilhafter Weise sind die Detektionssignale der Sensorik in einer Zentrale miteinander verknüpfbar und lassen sich diese zur Verkehrsauswertung/ Verkehrszählung oder zu sonstigen Zwecken nutzen. Beliebige Verknüpfungen der Signale und Auswertungen sind möglich.

Auch ist es denkbar, dass die Detektionssignale der Sensorik in einer Zentrale verknüpfbar und zur Überwachung der korrekten Fahrtrichtung, zum Beispiel in Einbahnstraßen, ggf. zur Erzeugung eines lichtoptischen und/oder akustischen Warnsignals, hinzuziehbar sind. Aufgrund der intelligenten Steuerung/Sensorik lassen sich schier endlos viele Nebeneffekte ableiten, nämlich aufgrund der Mannigfaltigkeit der detektierbaren Situationen.

Unter Nutzung der erfindungsgemäßen Außenleuchte, insbesondere aufgrund der dort besonderen Sensorik, lassen sich die relevanten Zielgruppen besser und sicherer erkennen, wodurch aufgrund der geringeren Schaltzyklen abermals eine Energieeinsparung realisierbar ist. Der Radarsensor nimmt zu- und abgehende Personen im Ausleuchtungsbereich der Außenleuchte wahr, wobei der Radar-Bewegungsmelder gewährleistet, dass das Licht nur dann aktiviert wird, wenn auch tatsächlich ein Bedarf besteht. Statische Hindernisse, die sich im Detektionsbereich befinden oder dort hinein geraten, beispielsweise abgestellte Fahrzeuge, Müllcontainer, Fahrräder, etc., sollen erkannt aber nicht zur Einschaltung der Beleuchtung hinzugezogen werden. Sind keine Personen anwesend, geht eine entsprechend eingestellte Leuchte in den Standby-Modus, wodurch sich abermals ein energieoptimaler Betrieb der Außenleuchte ergibt. So lässt sich die Kapazität des Akkumulators gegenüber herkömmlichen Systemen besser nutzen, reicht diese über einen längeren Zeitraum hinweg ohne Einspeisung von Fremdenergie.

Ein weiterer Vorteil aus dem bedarfsgerechten Betrieb der erfindungsgemäßen Außenleuchte bzw. des erfindungsgemäßen Außenbeleuchtungssystems ergibt sich aus der Vermeidung eines sogenannten Stroboskopeffekts, der insbesondere Nachbarn aufgrund eines ständig schlagartigen Ein- und Ausschaltens stört. Bei entsprechender Detektion lassen sich die Leuchtmittel dimmen, nämlich in ihrer Leuchtkraft allmählich hochfahren und entsprechend wieder herunterfahren, unter Zugrundelegung der Bewegungssituation der jeweiligen Person. Bei Detektion mehrerer Personen wird die Einschaltzeit unter Zugrundelegung eines entsprechenden Algorithmus verlängert.

Das erfindungsgemäße Außenbeleuchtungssystem verfügt somit über eine Art Pfadvorausschau durch Bewegungserkennung einzelner Objekte. Die Kommunikation zwischen benachbarten Außenleuchten, beispielsweise per Funk, gewährleistet eine Vorausberechnung und Weitermeldung der erforderlichen Steuerungssignale. Die Auswertung des Systemzustands sowie eine ständige Überwachung der Leuchtkraft beugt einem überraschenden Defekt bis hin zum Versagen der Außenleuchte vor. Zu Service- und Wartungszwecken lassen sich per Servicecomputer, Smartphone, etc. Eingriffe in das System vornehmen, bis hin zur manuellen Steuerung, neben der stufenweisen Erhöhung der Leuchtkraft, beispielsweise zu 30 %, 50 % und 100 %, kann eine stufenweise Dimmung realisiert werden.

Aus der erfindungsgemäßen Außenleuchte und aus solchen Außenleuchten bestehenden Außenbeleuchtungssystemen ergeben sich Vorteile für die Praxis, basierend auf einer intelligenten Steuerung, die nicht nur die Anwesenheit sondern auch eine Bewegungsrichtung mittels Radar erkennt, wobei benachbarte Außenleuchten miteinander kommunizieren. Dies alles kann unter Nutzung der solaren Energiegewinnung erfolgen.

Die erfindungsgemäße Außenleuchte lässt sich über Funk, WLAN, etc. von außen programmieren und konfigurieren, beispielsweise auch über eine Zentrale. Hinzukommt die Kommunikation zwischen den Außenleuchten, wobei zu Service- und Wartungszwecken die Leuchten ihren Systemzustand selbst diagnostizieren und bei Abruf oder ständig einer Zentrale mitteilen. So kann die Verschmutzung des Radarsensors, der Ladezustand der Batterie, die Alterung der Komponenten, etc. vermittelt werden. Die Kommunikation kann entsprechend den voranstehenden Ausführungen über einen Servicecomputer, ein Smartphone, etc. erfolgen, wobei sich der Status entsprechend der Anbindung über WLAN abrufen lässt. Auch ist ein Diebstahlschutz realisierbar, nämlich aufgrund der Einbindung in ein funküberwachtes System. Bei Entnahme einer einzelnen Außenleuchte oder einer Komponente davon aus dem System wird unverzüglich eine Fehlermeldung ausgegeben, beispielsweise gegenüber einem Servicetechniker. Die Nachbarleuchten oder alle Leuchten des Systems können dabei aktiviert werden.

Es gibt nun verschiedene Möglichkeiten, die Lehre der vorliegenden Erfindung in vorteilhafter Weise auszugestalten und weiterzubilden. Dazu ist einerseits auf die den Patentansprüchen 1 und 13 nachgeordneten Patentansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigt
- Fig. 1: in einer schematischen Ansicht ein Ausführungsbeispiel eines erfindungsgemäßen Außenbeleuchtungssystems, umfassend mehrere erfindungsgemäße Außenleuchten und
- Fig. 2: in einer schematischen Ansicht ein weiteres Ausführungsbeispiel eine Außenleuchte mit integrierter Strahlteilereinrichtung zur Schaffung zweier Abtastbereiche.

Gemäß der schematischen Ansicht der einzigen Figur sind, lediglich beispielhaft, drei entlang eines Fußgängerwegs 1 nacheinander aufgestellte Straßenleuchten 2 zu einem erfindungsgemäßen Außenbeleuchtungssystem zusammengefasst. Jede der Straßenleuchten 2 verfügt über ein Leuchtmittel 3, wobei es sich dabei um eine Anordnung von LEDs handelt. Eine geeignete Steuerung 4 ist im Mast 5 angeordnet und beispielsweise über eine Klappe zugänglich.

Des Weiteren ist der Straßenleuchte 2 eine besondere Sensorik zugeordnet, nämlich ein Radarsensor 6, wobei es sich regelmäßig um eine Anordnung von Radarsensoren 6 handelt, die kreisringförmig um das Leuchtmittel 3 oder am Mast 5 vorgesehen sind. Beliebige Anordnungen sind denkbar.

Durch die Pfeile 7 ist angedeutet, dass die Straßenleuchten 2 miteinander über Funk kommunizieren. Des Weiteren kommunizieren die Straßenleuchten 2, ebenfalls über Funk oder WLAN, mit einer schematisch angedeuteten Zentrale 8. Dies ist durch die Pfeile 9 gekennzeichnet.

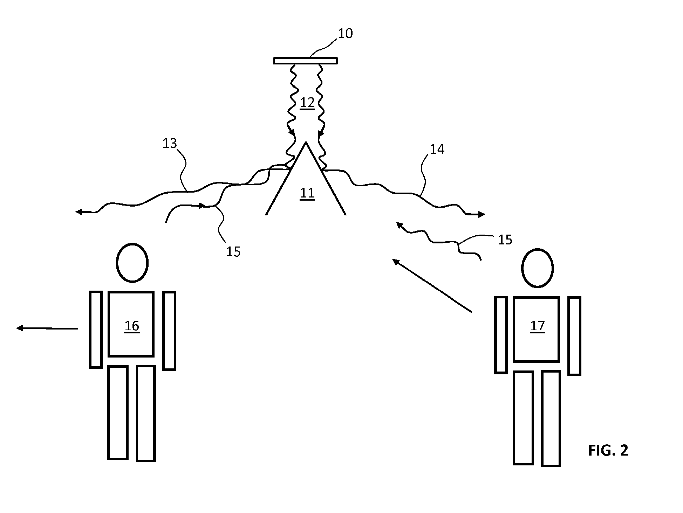

Im Rahmen einer weiteren Variante der erfindungsgemäßen Außenleuchte und unter Bezugnahme auf Fig. 2 ist ein gepulster Radarsender nebst Empfänger 10 vorgesehen. Die in Fig. 2 nicht gezeigte Auswerteelektronik erkennt anhand eines sich veränderten Signals, in welche Richtung sich die detektierte Person bewegt.

Im Konkreten richtet der Radarsender 10 seinen Strahl zuerst auf eine Strahlteilereinrichtung 11, die als zweiflächige Bleche, Spiegel, etc. ausgebildet sein können. Sie teilen den Radarstrahl 12 zur Seite hin, um beispielsweise auf der einen Seite einen Gehweg und auf der anderen Seite eine Straße "abzutasten". Die beiden Strahlhälften - Radarsignal links 13 und Radarsignal rechts 14 - sind gezeigt. Reflektierte Signale 15 gelangen über die Strahlteilereinrichtung 11 zurück zum Empfänger 10 und von dort aus zur Auswerteelektronik.

Durch Vorkehrung der Strahlteilereinrichtung 11 lassen sich mit einem einzigen Sensor bzw. Radarsender/Empfänger 10 zwei Bereiche abtasten. Obendrein ist von Vorteil, dass das linke Radarsignal 13 sich vom rechten Radarsignal 14 signaltechnisch derart unterscheidet, dass die beiden Signale seitenverkehrt beim Empfänger 10 ankommen. Folglich ist es möglich zu unterscheiden, ob die detektierten Personen auf die Außenleuchte 2 bzw. sich auf den Radarsender/Empfänger 10 zu bewegen oder sich davon wegbewegen. Der für sich bekannte Doppeleffekt lässt sich nutzen. Durch die mechanische Strahlteilereinrichtung kann ein zweiter Sensor eingespart werden. Obendrein wird die Detektion verbessert. Anhand der reflektierten Signale kann über die Auswerteelektronik erkannt werden, ob und wohin sich die detektierte Person bewegt.

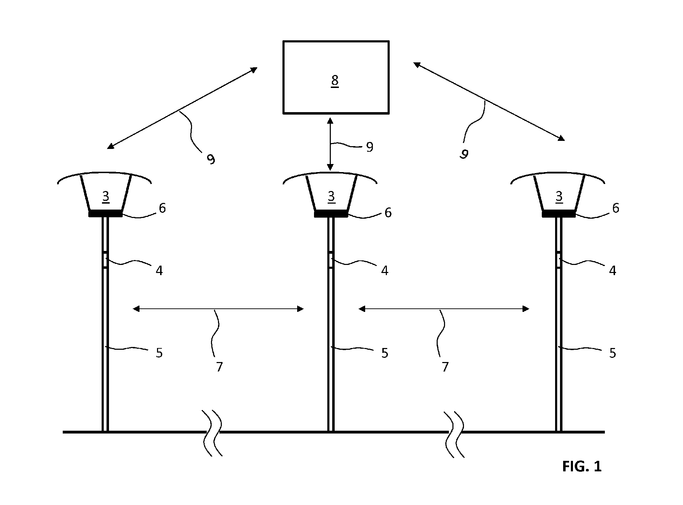

Bei Anordnung mehrerer Außenleuchten entsprechend der Darstellung in Fig. 1 und unter der Voraussetzung, dass gleichzeitig mehrere Personen unterwegs sind, kann das Signal entsprechend den Ausführungen zu Fig. 1 "übergeben" werden, so dass ermittelbar ist, welche Person wohin, d.h. in welche Richtung, unterwegs ist und wo sich die Person zum jeweiligen Zeitpunkt befindet.

Zur weiteren Funktion des erfindungsgemäßen Außenbeleuchtungssystems sei zur Vermeidung von Wiederholungen auf den allgemeinen Teil der Beschreibung verwiesen, wobei die dortige Aufzählung der unterschiedlichen Funktionen beispielhaft jedoch nicht abschließend ist.

Hinsichtlich weiterer vorteilhafter Ausgestaltungen der erfindungsgemäßen Außenleuchte und des erfindungsgemäßen Außenbeleuchtungssystems wird zur Vermeidung von Wiederholungen auf den allgemeinen Teil der Beschreibung sowie auf die beigefügten Patentansprüche verwiesen.

Schließlich sei ausdrücklich darauf hingewiesen, dass die voranstehend beschriebenen Ausführungsbeispiele der erfindungsgemäßen Außenleuchte und des erfindungsgemäßen Außenbeleuchtungssystems lediglich zur Erörterung der beanspruchten Lehre dienen, diese jedoch nicht auf das Ausführungsbeispiel einschränken.

### Bezugszeichenliste

- 1: Fußgängerweg
- 2: Außenleuchte, Straßenleuchte
- 3: Leuchtmittel
- 4: Steuerung, Prozessor
- 5: Mast
- 6: Radarsensor
- 7: Pfeil (Verbindung zwischen den Straßenleuchten)
- 8: Zentrale
- 9: Pfeil (Verbindung zwischen den Straßenleuchten und der Zentrale)
- 10: Radarsensor/Empfänger, Sensor
- 11: Strahlteilereinrichtung (Bleche, Spiegel)
- 12: Radarstrahl, Signal vom Radarsender
- 13: Radarsignallinks
- 14: Radarsignal rechts
- 15: reflektierte Signale

## Patentansprüche

1. Außenleuchte mit einem Leuchtmittel (3), einer Stromversorgung und einer Steuereinrichtung zur Betätigung des Leuchtmittels (3), wobei die Steuereinrichtung ggf. einen Prozessor (4) und eine Sensorik umfasst oder mit einer externen Sensorik kommuniziert,
**dadurch gekennzeichnet, dass** die Sensorik mindestens einen Radarsensor (6) aufweist.

2. Außenleuchte nach Anspruch 1, **dadurch gekennzeichnet, dass** die Sensorik derart eingestellt und/oder ausgelegt ist, dass sie Menschen und Fahrzeuge erfasst, jedoch nicht Tiere, Blätter, Wassertropfen, etc.

3. Außenleuchte nach Anspruch 1 oder 2, **dadurch gekennzeichnet, dass** die Sensorik neben der Anwesenheit auch die Bewegungsrichtung von Personen und/oder Fahrzeugen detektiert.

4. Außenleuchte nach einem der Ansprüche 1 bis 3, **dadurch gekennzeichnet, dass** die Sensorik auch die Anzahl von Personen und/oder Kraftfahrzeugen erfasst.

5. Außenleuchte nach einem der Ansprüche 1 bis 4, **dadurch gekennzeichnet, dass** bei detektierter Annäherung bis hin zur Anwesenheit vor oder an der Leuchte die Leuchtmittel (3) in Stufen oder stetig bis zur vollständigen Leuchtkraft aktiviert werden und bei detektierter Entfernung die Leuchtmittel (3) in Stufen oder stetig sukzessive deaktiviert werden.

6. Außenleuchte nach einem der Ansprüche 1 bis 5, **dadurch gekennzeichnet, dass** die Leuchtmittel (3) zumindest zeitweise vorzugsweise im hochfrequenten Bereich pulsmodulierbar sind.

7. Außenleuchte nach einem der Ansprüche 1 bis 6, **dadurch gekennzeichnet, dass** LED-Leuchtmittel vorgesehen sind.

8. Außenleuchte nach einem der Ansprüche 1 bis 7, **dadurch gekennzeichnet, dass** ergänzend oder alternativ zum Anschluss an ein Stromnetz eine Stromversorgung über Solarzellen und ggf. ein Energiemanagementsystem vorgesehen ist, wobei ein Akkumulator zur Pufferung des Stroms und zur Stromversorgung dient.

9. Außenleuchte nach einem der Ansprüche 1 bis 8, **dadurch gekennzeichnet, dass** eine Funkverbindung mit einer Zentrale (8) vorgesehen ist, über die eine Auswertung der Signale der Sensorik und/oder eine Fernwartung durchführbar ist, wobei eine integrierte Selbstdiagnose vorgesehen sein kann, die einen Statusbericht, insbesondere eine Fehlermeldung, an die Zentrale (8) übermittelt.

10. Außenleuchte nach einem der Ansprüche 1 bis 9, **dadurch gekennzeichnet, dass** eine Anbindung an das Internet, über LAN oder WLAN, vorgesehen ist und/oder dass über WLAN, LAN, UMTS, Bluetooth, Funk, etc. über einen Organizer, ein Pad oder einen mobilen Rechner, vorzugsweise über ein Notebook, Zugriff auf die Steuerung und ggf. den Prozessor (4) möglich ist.

11. Außenbeleuchtungssystem mit mindestens zwei Außenleuchten (2) nach einem der Ansprüche 1 bis 10, **dadurch gekennzeichnet, dass** die Außenleuchten (2) beispielsweise per Funk miteinander kommunizieren und über die detektierte Bewegungsrichtung eine Vorschau errechnet wird, die ein Schaltsignal zum Einschalten der in Bewegungsrichtung benachbarten Außenleuchte (2) liefert.

12. Außenbeleuchtungssystem nach Anspruch 11, **dadurch gekennzeichnet, dass** aus der Detektion der Sensorik benachbarter Leuchten die Bewegungsgeschwindigkeit ermittelt wird, die der Steuereinrichtung ein Signal zur Beeinflussung der Schaltzyklen bzw. Einschaltdauer einer einzelnen Außenleuchte (2) liefert.

13. Außenbeleuchtungssystem nach Anspruch 11 oder 12, **dadurch gekennzeichnet, dass** bei einer Anordnung mehrerer Außenleuchten (2) stets zwei oder drei benachbarte Außenleuchten (2) eingeschaltet werden, entsprechend der detektierten Bewegung und der Standortveränderung.

14. Außenbeleuchtungssystem nach einem der Ansprüche 11 bis 13, **dadurch gekennzeichnet, dass** die Detektionssignale der Sensorik in einer Zentrale (8) miteinander verknüpfbar und zur Verkehrsauswertung/Verkehrszählung nutzbar sind.

15. Außenbeleuchtungssystem nach einem der Ansprüche 11 bis 14, **dadurch gekennzeichnet, dass** die Detektionssignale der Sensorik in einer Zentrale (8) verknüpfbar und zur Überwachung der korrekten Fahrtrichtung, z.B. in Einbahnstraßen, ggf. zur Erzeugung eines lichtoptischen und/oder akkustischen Warnsignals hinzuziehbar sind.
